# EUROPEAN PATENT SPECIFICATION

(11) **EP 2 889 974 B1**
(45) Date of publication and mention of the grant of the patent: **14.12.2016**
(21) Application number: 13831498.4
(22) Date of filing: 22.08.2013
(51) Int. Cl.: H02G 3/04, B60R 16/02, H01B 7/00, H01B 7/29, H01B 7/42

(54) **WIRE HARNESS**
KABELBAUM
FAISCEAU DE CÂBLES

(30) Priority: 22.08.2012 JP 2012183644
(43) Date of publication of application: 01.07.2015
(73) Proprietor: Yazaki Corporation, Minato-ku Tokyo 108-8333 (JP)
(72) Inventor: SUGIMOTO Masahisa, Susono-shi Shizuoka 410-1194 (JP)
(74) Representative: Grünecker Patent- und Rechtsanwälte PartG mbB
(86) International application number: PCT/JP2013/072426
(87) International publication number: WO 2014/030703

(56) References cited:
- EP-A2- 2 338 741
- WO-A1-03/060373
- WO-A1-2004/042744
- DE-A1- 19 800 167
- FR-A1- 2 936 090
- FR-A1- 2 962 603
- JP-A- 2011 192 578
- JP-A- 2012 046 057
- JP-U- H0 461 413
- US-A- 5 727 599

## Description

### Technical Field

The present invention relates to a wire harness.

### Background Art

WO 03/060373 A1, WO 2004/042744 A1, DE 198 00 167 A1, FR 2 936 090 A1, FR 2 962 603 A1, EP 2 338 741 A2 disclose a wire harness according to the preamble of claim 1. In the related art, an external heat insulating sheath for protecting a wire harness from a heat source is proposed. The external heat insulating sheath is provided to cover the entire circumference of a portion of taped electrical wires, the portion being proximate to a heat source (refer to JP-A-7-29439).

### Citation List

### Patent Literature

[PTL 1] JP-A-7-29439

### Summary of Invention

### Technical Problem

However, in the wire harness disclosed in JP-A-7-29439, the external heat insulating sheath is wound around the entire circumference of the electrical wires, and therefore, once heat penetrates into the external heat insulating sheath from the heat source, it is difficult for the heat to escape out of the external heat insulating sheath. For this reason, the electrical wires may be exposed to a high temperature environment.

The present invention is made to solve the problem, and an object of the present invention is to provide a wire harness that can efficiently protect electrical wires proximate to a heat source.

### Solution to Problem

A wire harness according to the present invention has the following and characteristics so that the problem can be solved.

A wire harness includes at least one electrical wire; a protective member that is provided to cover an outer circumference of a part of the electrical wire in a longitudinal direction of the electrical wire; and an external heat insulating sheath that is wound around the protective member so as to cover a part of an outer circumferential surface of the protective member, wherein the external heat insulating sheath covers a substantial semicircumference of the outer surface of the protective member and a portion of the wire harness, around which the external heat insulating sheath is wound, becomes a heat insulating part, and a portion of the wire harness, around which the external heat insulating sheath is not wound, becomes a heat radiating part.

Accordingly, in the wire harness described above, a portion of the wire harness, around which the external heat insulating sheath is wound, becomes a heat insulating part, and a portion of the wire harness, around which the external heat insulating sheath is not wound and through which the protective member is exposed, becomes a heat radiating part. For this reason, the heat insulating part can shut out heat that is transferred to the electrical wire from a heat source, and heat penetrating into the external heat insulating sheath is allowed to escape through the heat radiating part. Accordingly, it is possible to efficiently protect the electrical wire proximate to the heat source.

In the wire harness described above, since the external heat insulating sheath covers a substantially semicircumference of the outer surface of the protective member, it is possible to set the size of the heat insulating part and the heat radiating part to be the same, and achieve a balance between heat insulating effects and heat radiating effects.

According to the present invention, it is possible to provide a wire harness that can efficiently protect electrical wires proximate to a heat source.

### Brief Description of Drawings

Figs. 1(a) and 1(b) are perspective views illustrating main portions of a wire harness according to an embodiment. Fig. 1(a) illustrates a view when seen from one side, and Fig. 1(b) illustrates a view when seen from the other side in Fig. 1(a).
Fig. 2 is a vertical cross-sectional view of the wire harness illustrated in Figs. 1(a) and 1(b).
Figs. 3(a) to 3(c) illustrate a cross-sectional view of the main portions of the wire harness. Fig. 3(a) illustrates a vertical cross-sectional view of the wire harness according to Example, Fig. 3(b) illustrates a vertical cross-sectional view of the wire harness according to Comparative Example 1, and Fig. 3(c) illustrates a vertical cross-sectional view of the wire harness according to Comparative Example 2.
Figs. 4(a) and 4(b) are a graph and a table illustrating the temperature of a point a illustrated in Figs. 3(a) to 3(c), respectively. Fig. 4(a) illustrates the temperature transition, and Fig. 4(b) illustrates the thermal effects.
Figs. 5(a) and 5(b) are a graph and a table illustrating the temperature of a point b illustrated in Figs. 3(a) to 3(c), respectively. Fig. 5(a) illustrates the temperature transition, and Fig. 5(b) illustrates the thermal effects.
Figs. 6(a) and 6(b) are a graph and a table illustrating the temperature of a point c illustrated in Figs. 3(a) to 3(c), respectively. Fig. 6(a) illustrates the temperature transition, and Fig. 6(b) illustrates the thermal effects.

### Description of Embodiments

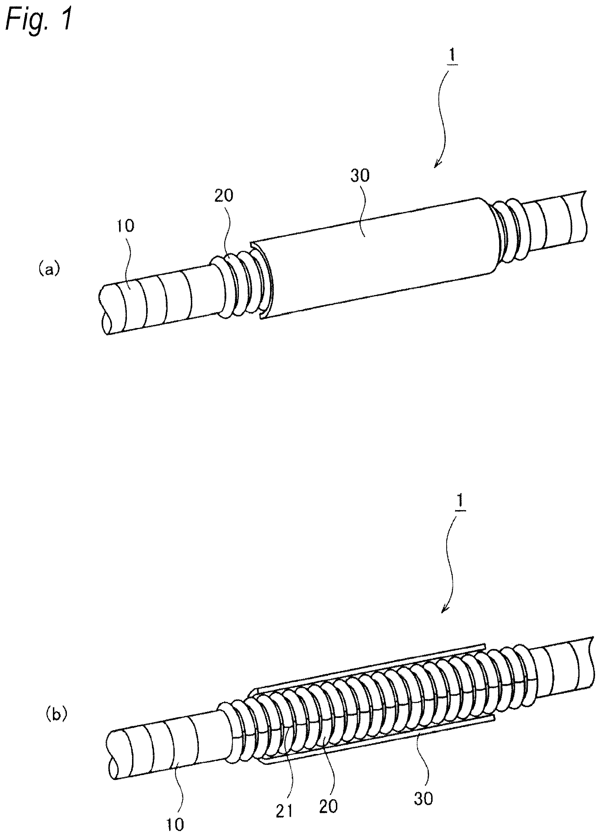

Hereinafter, an embodiment of a wire harness according to the present invention will be described with reference to Figs. 1(a) to 2. Figs. 1(a) and 1 (b) are perspective views illustrating main portions of the wire harness according to the embodiment, Fig. 1(a) illustrates a view when seen from one side, and Fig. 1 (b) illustrates a view when seen from the other side in Fig. 1 (a). In Figs. 1 (a) and 1 (b), a wire harness 1 includes a plurality of electrical wires 10; a corrugated tube (that is, protective member) 20; and an external heat insulating sheath 30. The electrical wire 10 may be formed by a piece of electrical wire.

As illustrated in Figs. 1(a) and 1(b), the plurality of electrical wires 10 are wound and bundled with a tape. The corrugated tube 20 is a cylindrical bellows-shaped member, and a slit 21 is formed along a longitudinal direction of the cylindrical corrugated tube 20. A part of the plurality of taped electrical wires 10 in the longitudinal direction is inserted into the corrugated tube 20 through the slit 21. As such, the corrugated tube 20 is provided to cover an external circumference of the part of the electrical wires 10 in a longitudinal direction.

The external heat insulating sheath 30 is a heat insulator that is provided on an outer circumference of the corrugated tube 20, and shuts off heat that is transferred to the plurality of electrical wires 10 from the outside of the wire harness 1. The external heat insulating sheath 30 has multiple layers, and an outermost layer is made of a reflective material such as an aluminum foil. For this reason, the external heat insulating sheath 30 reflects heat, and prevents heat from being transmitted to the electrical wires 10 therein.

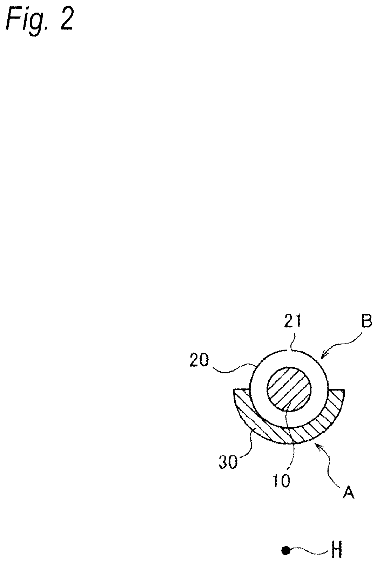

Fig. 2 is a cross-sectional view of the wire harness illustrated in Figs. 1(a) and 1(b). In Fig. 2, the position of the heat source is denoted by a reference sign H. As illustrated in Fig. 1 (a), 1 (b), and 2, in the embodiment, the external heat insulating sheath 30 is wound around the corrugated tube 20 for less than one turn. Specifically, the external heat insulating sheath 30 is wound around the corrugated tube 20 for a substantially half turn. In other words, the external heat insulating sheath 30 is wound around the corrugated tube 20 so as to cover a part of an outer circumferential surface of the corrugated tube 20. Specifically, the external heat insulating sheath 30 is provided to cover a substantial semicircumference of the outer surface of the corrugated tube 20 for a substantially half turn.

Accordingly, in the embodiment, a portion of the wire harness 1, around which the external heat insulating sheath 30 is wound, becomes a heat insulating part A, and a portion of the wire harness 1, around which the external heat insulating sheath 30 is not wound, becomes a heat radiating part B.

For example, it is possible to enable the heat insulating part A to reflect and shut out heat from the heat source H by positioning the heat insulating part A toward the heat source H. Heat penetrating into the corrugated tube 20 through the heat insulating part A can be discharged through the heat radiating part B. Accordingly, it is possible to efficiently protect the plurality of electrical wires 10.

In particular, in the embodiment, the external heat insulating sheath 30 is wound around the corrugated tube 20 so as to cover a substantial semicircumference of the outer surface of the corrugated tube 20. For this reason, it is possible to set the size of the heat insulating part A and the heat radiating part B to be the same, and achieve a balance between heat insulating effects and heat radiating effects. That is, when the heat radiating part B is excessively large, the heat insulating effects deteriorates, heat is likely to penetrate into the corrugated tube 20 from the heat source H, and thus the temperature inside the corrugated tube 20 may increase. When the heat insulating part A is excessively large, the heat radiating effects deteriorates, heat penetrating into the corrugated tube 20 is unlikely to be radiated, and thus the temperature inside the corrugated tube 20 may increase. Accordingly, as in the embodiment, when the external heat insulating sheath 30 is wound around the electrical wires 10 for a half turn, and both effects are balanced against each other, the electrical wires 10 can be effectively protected from heat.

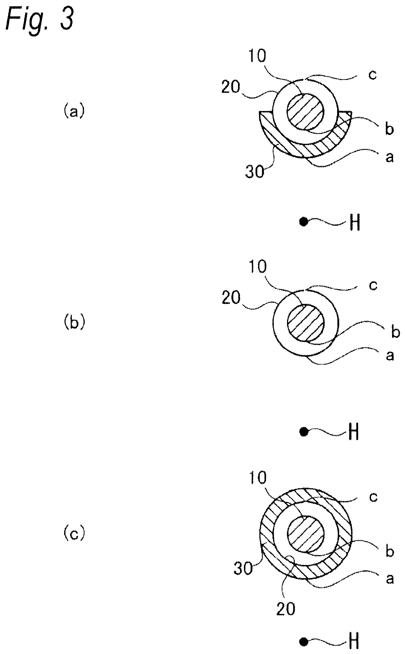

Subsequently, an example and comparative examples of the present invention will be described. Each of Figs. 3(a) to 3(c) illustrates a cross-sectional view of the main portions of the wire harness, Fig. 3(a) illustrates a cross-sectional view of the wire harness according to Example, Fig. 3(b) illustrates a cross-sectional view of the wire harness according to Comparative Example 1, and Fig. 3(c) illustrates a cross-sectional view of the wire harness according to Comparative Example 2. Even in Fig. 3, the position of the heat source is denoted by the reference sign H.

In the wire harness according to Example illustrated in Fig. 3(a), coaxial electrical wires are used for the electrical wires 10, and the corrugated tube 20 made of polypropylene and having a diameter of φ 19 is used.

An aramid cloth (with a structure of multiple layers including 20 µm of an aluminum foil, a plain woven glass cloth, and an aramid non-woven fabric) made by Nitto Denko Corporation is used as a first example in the external heat insulating sheath 30, and A2G-100 (with a structure of multiple layers including 20 µm of an aluminum foil, a glass cloth (with stainless steel wires embedded), 20 µm of an aluminum foil, and a double-sided cloth tape (Nitto 5011 N)) made by Zippertubing (Japan), Ltd. is used as a second example in the external heat insulating sheath 30.

In the wire harness according to the Comparative Example 1 illustrated in Fig. 3(b), coaxial electrical wires are used for the electrical wires 10, and the corrugated tube 20 made of polypropylene and having a diameter of φ 19 is used. In Comparative Example 1, the external heat insulating sheath 30 is not used.

In the wire harness according to the Comparative Example 2 illustrated in Fig. 3(c), the electrical wires 10, the corrugated tube 20, and the external heat insulating sheath 30 which are the same as in Example are used. The external heat insulating sheath 30 is wound around the entire circumference of the corrugated tube 20.

In Example and Comparative Examples 1 and 2, the 380°C heat source is disposed to be separate from the wire harness by 58 mm (58 mm is a distance between the outer circumference of the corrugated tube 20 and the heat source), and the temperature of each portion is measured for 20 minutes after the temperature is stabilized.

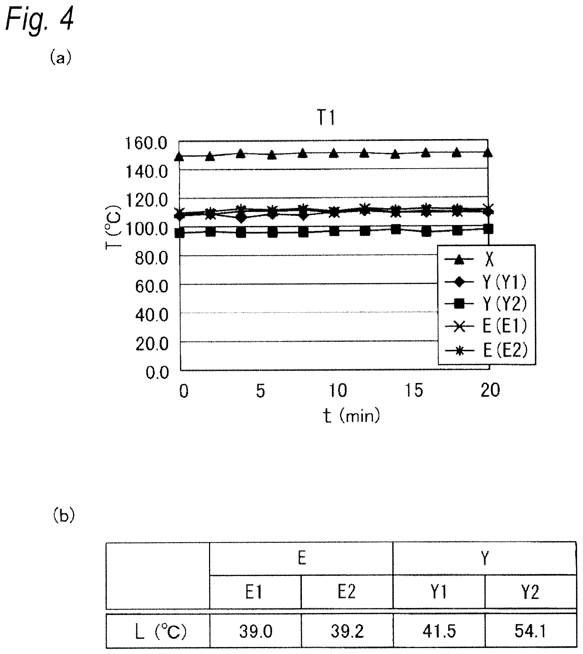

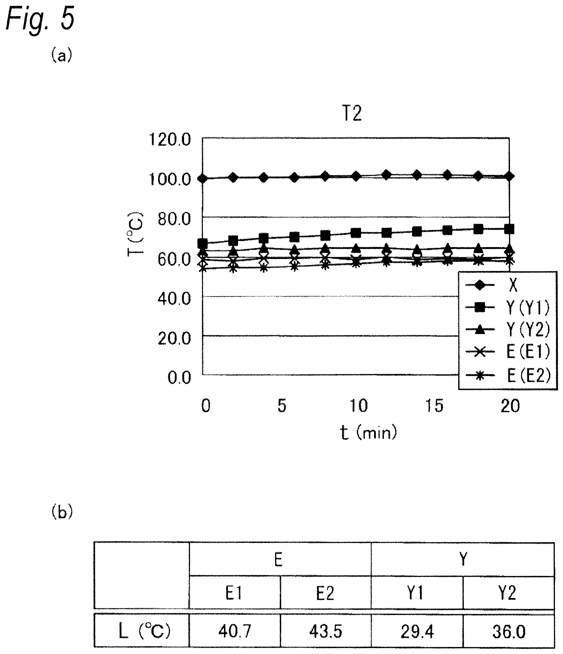

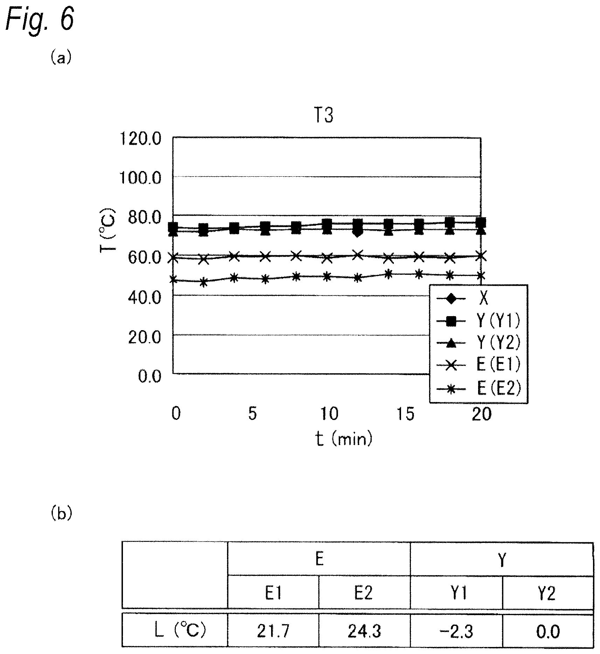

Figs. 4(a) and 4(b) are a graph and a table illustrating the temperature of a point a illustrated in Figs. 3(a) to 3(c), respectively, Fig. 4(a) illustrates the temperature transition, and Fig. 4(b) illustrates the thermal effects. That is, Fig. 4(a) is a graph illustrating the transition of a surface temperature T1 of the external heat insulating sheath, and Fig. 4(b) is a table illustrating a thermal effect L (°C). In the graph illustrated in Fig. 4(a), the vertical axis indicates a temperature T (°C), and the horizontal axis indicates an elapsed time t (min). In Figs. 4(a) and 4(b), Comparative Example 1 is denoted by a reference sign X, Comparative Example 2 is denoted by a reference sign Y, and Example is denoted by a reference sign E. In Comparative Example 2, a first example is denoted by a reference sign Y1, and a second example is denoted by a reference sign Y2. In Example, a first example is denoted by a reference sign E1, and a second example is denoted by a reference sign E2. The same nomenclature is also applied to Figs. 5(a) and 5(b), and Figs. 6(a) and 6(b).

First, as illustrated in Fig. 4(a), in the wire harness according to Comparative Example 1, the surface temperature of the corrugated tube 20 is approximately 150°C. In contrast, in the first and second examples of Example, the surface temperature of the external heat insulating sheath 30 is approximately 110°C. In the first example of Comparative Example 2, the surface temperature of the external heat insulating sheath 30 is slightly below 110°C, and in the second example of Comparative Example 2, the surface temperature of the external heat insulating sheath 30 is 95°C.

As being apparent from Fig. 4(a), the surface temperature of an outermost layer of each of the wire harnesses is lowest in Comparative Example 2 with Example and Comparative Example 1 following in succession.

As illustrated in Fig. 4(b), the thermal effect L becomes "39.0" in the first example of Example, and "39.2" in the second example. The thermal effect L becomes "41.5" in the first example of Comparative Example 2, and "54.1" in the second example. The thermal effect L indicates differences in the surface temperature of the outermost layer between Example and Comparative Example 2, and between Comparative Example 1 and Comparative Example 2, and indicates an average value of the temperature differences for 20 minutes after the temperature is stabilized.

As being apparent from Figs. 4(a) and 4(b), the surface temperature of the corrugated tube 20 in Comparative Example 2 is lower than that in Example, and the thermal effect L in Comparative Example 2 is greater than that in Example. At a glance, it appears that the external heat insulating sheath 30 is preferably wound around the entire circumference of the corrugated tube 20.

However, from the observation of the temperature inside the corrugated tube 20, the inventor of the present invention finds that a half turn winding of the external heat insulating sheath 30 in Example has a lower surface temperature of the electrical wires 10 and a greater thermal effect compared to Comparative Examples.

Figs. 5(a) and 5(b) are a graph and a table illustrating the temperature of a point b illustrated in Figs. 3(a) to 3(c), respectively, Fig. 5(a) illustrates the temperature transition, and Fig. 5(b) illustrates the thermal effects. That is, Fig. 5(a) is a graph illustrating the transition of an internal temperature T2 of the corrugated tube 20, and Fig. 5(b) is a table illustrating the thermal effect L (°C). In the graph illustrated in Fig. 5(a), the vertical axis indicates the temperature T (°C), and the horizontal axis indicates the elapsed time t (min).

As illustrated in Fig. 5(a), in the wire harness according to Comparative Example 1, the surface temperature of the electrical wires 10 is approximately 100°C. In contrast, in the first example of Example, the surface temperature of the electrical wires 10 is approximately 60°C, and in the second example, the surface temperature of the electrical wires 10 is approximately 55°C. In the first example of Comparative Example 2, the surface temperature of the electrical wires 10 is above 70°C, and in the second example of Comparative Example 2, the surface temperature of the electrical wires 10 is approximately 65°C.

As being apparent from Fig. 5(a), the surface temperature of the electrical wires 10 is lowest in Example with Comparative Example 2 and Comparative Example 1 following in succession.

As illustrated in Fig. 5(b), the thermal effect L becomes "40.7" in the first example of Example, and "43.5" in the second example. The thermal effect L becomes "29.4" in the first example of Comparative Example 2, and "36.0" in the second example.

As being apparent from Figs. 5(a) and 5(b), the surface temperature of the electrical wires 10 in Example is lower than that in Comparative Example 2, and the thermal effect L in Example is greater than that in Comparative Example 2. That is, as described with reference to Figs. 4(a) and 4(b), at a glance, it appears that one full turn winding of the external heat insulating sheath 30 is excellent in heat insulating properties and thermal effect. However, from the measurement of the temperature inside the corrugated tube 20, the inventor of the present invention finds that a half turn winding is excellent. That is, the inventor finds that the heat radiating part B works suitably.

Figs. 6(a) and 6(b) are a graph and a table illustrating the temperature of a point c illustrated in Figs. 3(a) to 3(c), respectively, Fig. 6(a) illustrates the temperature transition, and Fig. 6(b) illustrates the thermal effects. That is, Fig. 6(a) is a graph illustrating the transition of an internal temperature T3 of the corrugated tube 20, and Fig. 5(b) is a table illustrating the thermal effect L (°C). In the graph illustrated in Fig. 6(a), the vertical axis indicates the temperature T (°C), and the horizontal axis indicates the elapsed time t (min).

As illustrated in Fig. 6(a), in the wire harness according to Comparative Example 1, the surface temperature of an upper portion (that is, a place that separates farthest from the heat source) of the corrugated tube 20 is approximately 75°C. In contrast, in the first example of Example, the surface temperature of the upper portion of the corrugated tube 20 is approximately 50°C, and in the second example, the surface temperature of the upper portion of the corrugated tube 20 is below approximately 50°C. In the first example of Comparative Example 2, the surface temperature of the upper portion of the corrugated tube 20 is above 75°C, and in the second example of Comparative Example 2, the surface temperature of the upper portion of the corrugated tube 20 is approximately 75°C.

As being apparent from Fig. 6(a), the surface temperature of the upper portion of the corrugated tube 20 is lowest in Example, and Comparative Example 1 and Comparative Example 2 have substantially the same surface temperature of the upper portion of the corrugated tube 20.

As illustrated in Fig. 6(b), the thermal effect L becomes "21.7" in the first example of Example, and "24.3" in the second example. The thermal effect L becomes "-2.3" in the first example of Comparative Example 2, and "0.0" in the second example.

As being apparent from Figs. 6(a) and 6(b), the surface temperature of the upper portion of the corrugated tube 20 in Example is lower than that in Comparative Example 2, and the thermal effect L in Example is greater than that in Comparative Example 2. That is, the heat radiating part B works suitably.

As such, in the wire harness 1 according to the embodiment, the heat insulating part A is formed in a portion of the wire harness 1, around which the external heat insulating sheath 30 is wound, and the heat radiating part B is formed in a portion of the wire harness 1, around which the external heat insulating sheath 30 is not wound, and therefore, the heat insulating part A can shut out heat from the heat source, and heat is allowed to escape through the heat radiating part B. Accordingly, it is possible to efficiently protect the electrical wires proximate to the heat source.

Since the external heat insulating sheath 30 is wound around the corrugated tube 20 so as to cover a substantial semicircumference of the outer surface of the corrugated tube 20, it is possible to set the size of the heat insulating part A and the heat radiating part B to be the same, and achieve a balance between the heat insulating effects and the heat radiating effects.

The present invention is described based on the embodiment, but the present invention is not limited to the embodiment, and insofar as modifications do not depart from the scope of the present invention, modifications may be made to the present invention.

For example, in the wire harness 1 according to the embodiment, the external heat insulating sheath 30 is not limited to the above-mentioned configuration, and may be other members having heat insulating effect. The outermost layer of the external heat insulating sheath 30 is preferably made of a reflective material such as an aluminum foil, but the present invention is not limited to the configuration, and may not be made of a reflective material. Instead of the reflective material such as an aluminum foil, the entirety or the outermost layer of the external heat insulating sheath 30 may be coated in a color having high reflectivity such as a white color or a silver color.

In the embodiment, the corrugated tube 20 is exemplified as an example of a protective member, but the protective member is not limited to the corrugated tube 20.

The wire harness 1 according to the embodiment is summarized as follows.
(1) A wire harness 1 includes at least one electrical wire 10; a protective member (corrugated tube 20) that is provided to cover an outer circumference of a part of the electrical wire 10 in a longitudinal direction of the electrical wire; and an external heat insulating sheath 30 that is wound around the protective member so as to cover a part of an outer circumferential surface of the protective member. Accordingly, a portion of the wire harness 1, around which the external heat insulating sheath 30 is wound, becomes the heat insulating part A, and a portion of the wire harness 1, around which the external heat insulating sheath 30 is not wound and through which the protective member is exposed, becomes the heat radiating part B.
(2) In the wire harness 1, the external heat insulating sheath 30 covers a substantial semicircumference of the outer surface of the protective member.

This application is based on Japanese Patent Application (JP-A-2012-183644) filed on August 22, 2012, and the content of which is incorporated herein by way of reference.

### Industrial Applicability

A wire harness according to the present invention is useful in that it is possible to efficiently protect electrical wires proximate to a heat source.

### Reference Signs List

- 1:: wire harness
- 10:: electrical wire
- 20:: corrugated tube (protective member)
- 21:: slit
- 30:: external heat insulating sheath

## Claims

1. A wire harness (1) comprising:
at least one electrical wire (10);
a protective member (20) that is provided to cover an outer circumference of a part of the electrical wire (10) in a longitudinal direction of the electrical wire (10); and
an external heat insulating sheath (30) that is wound around the protective member (20) so as to cover a part of an outer circumferential surface of the protective member (20),
**characterized in that**
the external heat insulating sheath (30) covers a substantial semicircumference of the outer surface of the protective member (20) and
a portion of the wire harness (1), around which the external heat insulating sheath (30) is wound, becomes a heat insulating part (A), and a portion of the wire harness (1), around which the external heat insulating sheath (30) is not wound, becomes a heat radiating part (B).

## Patentansprüche

1. Kabelbaum (1), der umfasst:
wenigstens ein elektrisches Kabel (10);
ein Schutzelement (20), das einen Außenumfang eines Teils des elektrischen Kabels (10) in einer Längsrichtung des elektrischen Kabels (10) abdeckt; und
eine äußere Wärmeisolier-Ummantelung (30), die so um das Schutzelement (20) herum gewickelt ist, dass sie einen Teil einer Außenumfangsfläche des Schutzelementes (20) abdeckt,
**dadurch gekennzeichnet, dass**
die äußere Wärmeisolier-Ummantelung (30) im Wesentlichen einen halben Umfang der Außenfläche des Schutzelementes (20) abdeckt, und
ein Teil des Kabelbaums (1), um den die äußere Wärmeisolier-Ummantelung (30) herum gewickelt ist, zu einem Wärmeisolier-Teil (A) wird und ein Teil des Kabelbaums (1), um den die äußere Wärmeisolier-Ummantelung (30) nicht herum gewickelt ist, zu einem Wärmeabstrahl-Teil (B) wird.

## Revendications

1. Faisceau de câbles (1) comprenant :
au moins un câble électrique (10) ;
un élément de protection (20) qui est prévu pour couvrir une circonférence extérieure d'une partie du câble électrique (10) dans une direction longitudinale du câble électrique (10) ; et
une gaine extérieure d'isolation thermique (30) qui est enroulée autour de l'élément de protection (20) de manière à couvrir une partie d'une surface circonférentielle extérieure de l'élément de protection (20),
**caractérisé en ce que**
la gaine extérieure d'isolation thermique (30) couvre une demi-circonférence substantielle de la surface extérieure de l'élément de protection (20), et
une partie du faisceau de câbles (1) autour de laquelle la gaine extérieure d'isolation thermique (30) est enroulée devient une partie d'isolation thermique (A), et une partie du faisceau de câbles (1) autour de laquelle la gaine extérieure d'isolation thermique (30) n'est pas enroulée devient une partie de rayonnement thermique (B).
